# FASCICULE DE BREVET EUROPEEN

(11) **EP 0 367 692 B1**
(45) Date de publication et mention de la délivrance du brevet: **28.06.1995**
(21) Numéro de dépôt: 89420416.3
(22) Date de dépôt: 25.10.1989
(51) Int. Cl.: G05B 19/04

(54) **Module de commande, manuel ou automatique, par exemple à bouton-poussoir, destiné à être connecté à un réseau de transmission de données**
Manueller oder automatischer Steuermodul, beispielsweise mit einem Druckknopf, zur Verbindung mit einem Datennetz
Manual or automatic control modul, for example with push button, to be connected to a data transmission network

(30) Priorité: 04.11.1988 FR 8815058
(43) Date de publication de la demande: 09.05.1990
(73) Titulaire: SCHNEIDER ELECTRIC SA, 92100 Boulogne Billancourt (FR)
(72) Inventeur: Demeyer, Pierre, F-38050 Grenoble Cédex (FR)
(74) Mandataire: Jouvray, Marie-Andrée

(56) Documents cités:
- EP-A- 0 068 482
- WO-A-87/02795
- DE-A- 3 624 139
- FR-A- 2 558 609
- H. Lilen: "Du microprocesseur au micro-ordinateur", Editions Radio Paris, 1980, pages 350-351
- Contronic P, digitales Automatisierungssystem für die Prozesstechnik, Hartmann & Braun, 10/1980.

## Description

L'invention concerne Module de commande, manuel ou automatique d'un actionneur, destiné à être connecté à un réseau de transmission de données , auquel sont connectés une pluralité de modules de commande et d'actionneurs, un même actionneur pouvant être associé à une pluralité de modules de commande, le module de commande comportant un microprocesseur, et des moyens d'adressage pour lui affecter une adresse, le microprocesseur comportant des moyens de générer et d'émettre sur le réseau des messages destinés à la commande de l'actionneur associé.

Dans les automates de gestion technique de bâtiment des modules de commande sont destinés à contrôler, par l'intermédiaire d'un réseau de transmission de données, des actionneurs associés situés à distance.

Un module de commande selon l'invention comporte :
- des moyens pour fournir au microprocesseur une adresse de l'actionneur associé
- et des moyens d'indication de l'état de l'actionneur, commandés par le microprocesseur, le microprocesseur comportant :
- des moyens de surveillance des messages transmis sur le réseau, lesdits messages comportant l'adresse de l'actionneur auquel ils sont destinés ou dont ils proviennent,
- des moyens d'identification, à partir de ladite adresse,des messages concernant ledit actionneur,
- et des moyens de détermination de l'état de l'actionneur à partir desdits messages.

L'état de l'actionneur est ainsi indiqué sur chacun des modules de commande qui lui sont associés, quelle que soit la provenance de l'ordre de commande. Les moyens d'indication de l'état de l'actionneur sont de préférence constitués par des diodes électroluminescentes.

Le microprocesseur comporte des moyens pour détecter des messages destinés à l'actionneur associé et/ou des messages émis par l'actionneur en réponse à un ordre de commande dudit actionneur, les messages comportant l'adresse dudit actionneur.

Selon un développement de l'invention le microprocesseur comporte une entrée et une sortie reliées à une interface, elle même reliée au réseau de transmission, une entrée de commande recevant des signaux de commande ou de mesure et au moins une sortie de commande des moyens d'indication de l'état de l'actionneur.

Dans un mode de réalisation particulier, le module de commande est constitué par un module à bouton-poussoir et l'entrée de commande du microprocesseur est connectée à une source de tension par l'intermédiaire d'un bouton-poussoir, l'actionnement du bouton-poussoir provoquant l'émission par le microprocesseur d'un message de commande destiné à l'actionneur associé. Dans un tel module à bouton-poussoir, peut être prévu un commutateur à 3 positions dont les sorties, codées, sont connectées au microprocesseur, l'actionnement du bouton-poussoir entraînant l'émission d'un ordre de marche de l'actionneur associé dans une première position du commutateur, d'un ordre d'arrêt dans la deuxième position et d'un ordre de changement d'état dans la troisième position.

Selon un autre mode de réalisation particulier le module de commande est constitué par un module de mesure et l'entrée de commande du microprocesseur est connectée à un capteur de mesure, le microprocesseur comparant les signaux de sortie du capteur de mesure à des seuils prédéterminés et émettant des ordres de commande de l'actionneur en fonction des valeurs relatives des signaux de mesure et des seuils.

D'autres avantages et caractéristiques ressortiront plus clairement de l'exposé qui va suivre d'un mode particulier de réalisation de l'invention, donné à titre d'exemple non limitatif et représenté aux dessins annexés dans lesquels:

La figure 1 représente schématiquement un automate de gestion dans lequel l'invention peut être mise en oeuvre.

La figure 2 illustre un module à bouton-poussoir selon l'invention.

La figure 3 représente un mode de réalisation particulier d'une interface d'un module selon la figure 2.

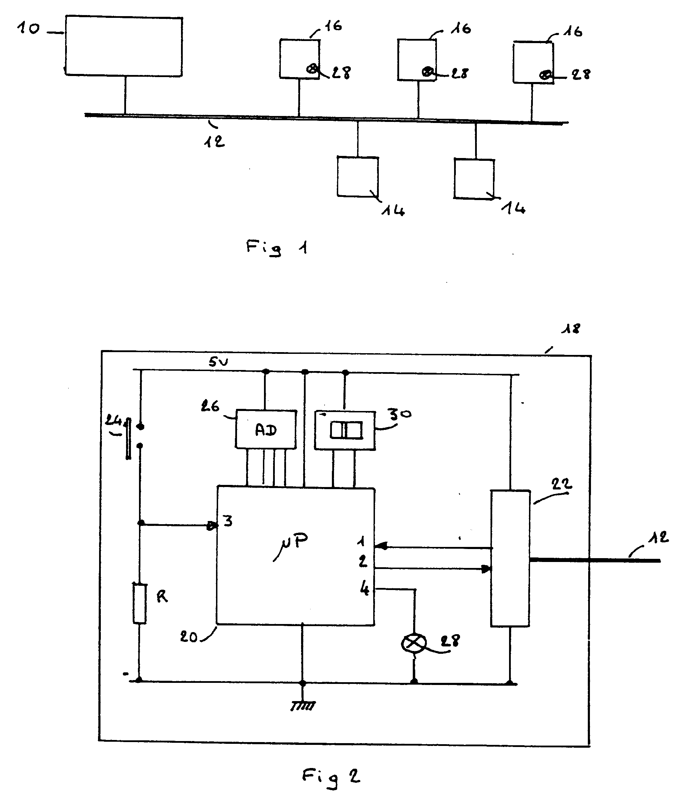

L'automate de gestion technique de bâtiment représenté schématiquement sur la figure 1 comporte une unité centrale 10 connectée par un réseau de transmission de données, ou bus, 12 à une pluralité d'actionneurs 14 et à une pluralité de modules de commande 16, qui peuvent être constitués par des capteurs, des boutons-poussoirs, etc...

La figure 2 représente plus en détail un module de commande constitué par un module à bouton-poussoir 18. Le module 18 est connecté au réseau 12 et destiné à commander un actionneur (non représenté) associé, lui-même connecté au réseau. Cet actionneur peut être commandé par l'unité centrale 10 et par plusieurs modules de commande 16 associés, dont le module à bouton-poussoir 18.

Le module 18 peut, par exemple, être utilisé pour commander une lampe ou un appareil ménager situé dans une autre pièce du bâtiment contrôlé par l'automate. Selon l'invention il est prévu de disposer, sur le module 18, d'une indication de l'état de l'actionneur associé.

Le module à bouton-poussoir 18 comporte un microprocesseur 20 dont une porte d'entrée 1 et une porte de sortie 2 sont connectées par une interface 22 au réseau 12. Le module 18 peut ainsi émettre des messages, qui sont transmis par le réseau 12 à l'actionneur associé, et surveiller l'ensemble des messages circulant sur le réseau.

Une porte d'entrée 3 de commande du microprocesseur est normalement reliée, par l'intermédiaire d'une résistance R, à la masse. Un bouton-poussoir 24 permet de relier temporairement cette entrée 3 à la tension d'alimentation (5V) du module. La fermeture du bouton-poussoir 24 conduit à l'émission par le microprocesseur 20 d'un message, ou ordre de commande, en direction de l'actionneur associé au module.

Un système d'adressage 26, par exemple constitué par une roue codeuse, permet d'affecter une adresse au module 18. Dans le mode de réalisation représenté le système d'adressage, qui permet de connecter sélectivement ses 4 sorties à la tension d'alimentation, fournit au microprocesseur une adresse codée sur 4 bits. Dans un mode de réalisation préféré, la même adresse est affectée à un actionneur et aux divers modules de commande qui lui sont associés.

Le message émis par le module 18 lors de l'actionnement du bouton-poussoir 24 contient cette adresse, indiquant ainsi au microprocesseur de l'actionneur associé, que ce message lui est adressé.

Un voyant 28, qui peut être constitué par une diode électroluminescente, est connecté entre une sortie 4 du microprocesseur et la masse. Ce voyant est destiné à indiquer l'état de l'actionneur associé au module 18. Le microprocesseur 20 du module 18 surveille en permanence les messages transmis sur le réseau 12. Il détecte, au moyen de leur adresse, tous les messages destinés à l'actionneur associé et, connaissant ainsi les ordres successifs, par exemple marche, arrêt ou changement d'état, qui sont adressés à l'actionneur, il en déduit l'état de celui-ci et commande sa sortie 4 de manière à ce que le voyant 28 donne une indication de l'état de l'actionneur. A titre d'exemple le voyant 28 peut s'allumer, la sortie 4 du microprocesseur étant portée à la tension d'alimentation, pour indiquer l'état de marche de l'actionneur et s'éteindre, la sortie 4 étant mise à la masse, pour indiquer l'arrêt de l'actionneur.

Selon un autre mode de réalisation, non représenté, l'indicateur est constitué par une diode électroluminescente bicolore, par exemple verte et rouge, commandée par le microprocesseur de manière à clignoter en vert lorsque l'actionneur associé est en état de marche, et en rouge lorsque l'actionneur est à l'arrêt.

Dans le mode de réalisation représenté le module à bouton-poussoir 18 comporte un commutateur 30 permettant de sélectionner le mode de fonctionnement du module.

Celui-ci peut, en effet, à chaque actionnement du bouton-poussoir 24, émettre sur le réseau, en direction de l'actionneur associé, soit un ordre de passage à l'état de marche, soit un ordre de passage à l'état d'arrêt, soit un ordre de changement d'état. Le mode de fonctionnement choisi peut être préprogrammé dans le microprocesseur. Cependant, dans le mode de réalisation préféré le mode de fonctionnement désiré peut être sélectionné manuellement par un opérateur au moyen du commutateur 30. Sur la figure, le commutateur 30 à trois positions, comporte deux sorties connectées au microprocesseur, ces deux sorties pouvant être connectées sélectivement à la tension d'alimentation. Dans une première position du commutateur, aucune des sorties n'est connectée à la tension d'alimentation. Dans la seconde position du commutateur une première sortie est connectée à la tension d'alimentation, tandis que dans la troisième position, seule la seconde sortie est connectée à la tension d'alimentation. Chacune des positions correspond à un des 3 modes de fonctionnement décrit ci-dessus.

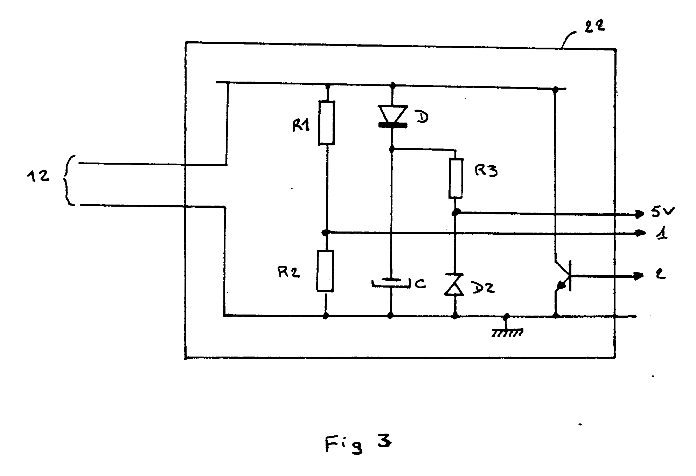

La figure 3 illustre un mode de réalisation particulier d'une interface 22 dans le cas où le réseau de transmission 12 est constitué par deux fils permettant simultanément la transmission de données et l'alimentation des modules qui y sont connectés, les deux fils étant connectés à une source d'alimentation (non représentée) et la transmission des données s'effectuant par mise en court-circuit des deux fils. Un diviseur de tension, constitué par deux résistances R1 et R2 disposées en série entre les deux fils du réseau 12, permet de surveiller les messages transmis sur le réseau, le point commun aux résistances étant connecté à l'entrée 1 du microprocesseur. Un transistor T, dont la jonction émetteur-collecteur est montée entre les deux fils du réseau, et dont la base est connectée à la sortie 2 du microprocesseur, réalise l'interface de sortie entre le microprocesseur et le réseau 12. Un message émis par le microprocesseur sous la forme d'impulsions successives appliquées à la base du transistor, provoque une succession de mises en court-circuit des fils du réseau. Le réseau 12 fournit également l'alimentation du module: une diode D est disposée en série avec un condensateur C entre les fils du réseau, le condensateur étant connecté en parallèle sur une résistance R3 et une diode Zener ZD connectée en série. La tension d'alimentation du module est alors disponible aux bornes de la diode Zener.

Bien que l'invention ait été décrite en prenant pour exemple un module à bouton-poussoir, elle n'est limitée ni au type de module particulier représenté, ni à un module à bouton-poussoir, mais s'applique au contraire à tout module de commande à microprocesseur destiné à commander un actionneur par l'intermédiaire d'un réseau de transmission de données. L'ordre de commande peut être fourni manuellement au module de commande, par un bouton-poussoir, un interrupteur ou tout autre organe mécanique disposé dans l'organe de commande, automatiquement par comparaison d'une grandeur mesurée à un seuil, ou par programmation. A titre d'exemple, un module de commande automatique peut être constitué par un capteur de température comportant une sonde de température dont les signaux de mesure sont appliqués à l'entrée de commande (3) du microprocesseur. Celui-ci compare l'amplitude de ces signaux à au moins un seuil prédéterminé et émet des ordres de marche ou d'arrêt à un actionneur destiné à ouvrir ou fermer une vanne de chauffage.

Jusqu'ici les exemples décrits ne se refèrent qu'à des modules de commande du type tout ou rien, provoquant la marche ou l'arrêt de l'actionneur associé. L'invention peut également s'appliquer à des modules de commande et à un actionneur associé fonctionnant en analogique ou avec plusieurs seuils de fonctionnement. Dans ce cas on ajoute un circuit de mise à l'échelle du signal analogique et un convertisseur analogique numérique ou des comparateurs. A titre d'exemple, un capteur de température peut comparer les signaux de température qu'il reçoit à plusieurs seuils séparés par des intervalles prédéterminés et envoyer des ordres appropriés pour la commande de l'actionneur associé, par exemple fermeture, ouverture complète, ouverture à 60%, à 50%, etc... Dans ce cas, l'indicateur doit être adapté de manière à permettre une indication différenciée de l'état de l'actionneur. Le nombre et la disposition des éléments lumineux peut être adapté selon les besoins. Un voyant peut permettre d'indiquer deux états, arrêt ou marche, sans différencier les états correspondants à une marche à taux réduit. Il peut également permettre d'indiquer 3 états, la marche à taux réduit étant signalée par un clignotement du voyant. On peut prévoir un nombre de voyants correspondant au nombre d'états différents pouvant être pris par l'actionneur, de manière à indiquer avec précision, au niveau du module de commande, les différents états de l'actionneur.

Bien que dans le mode de réalisation représenté à la figure 3, le réseau 12 constitue à la fois un réseau à deux fils d'alimentation et de transmission de données, l'invention n'est pas limitée à ce type de réseau et l'alimentation des modules et des actionneurs peut être réalisée par des moyens distincts du réseau.

Dans le mode de réalisation décrit l'actionneur et les modules de commande associés comportent la même adresse, ce qui facilite la reconnaissance par les différents modules de commande des messages destinés à l'actionneur associé. Cependant il est possible de mettre en oeuvre l'invention dans un automate dans lequel on affecte à chaque module de commande et à chaque actionneur une adresse différente. Dans ce cas, chaque module de commande doit être programmé de manière à connaître l'adresse de l'actionneur associé. Tous les messages envoyés à l'actionneur contiennent son adresse, adresse de destination, et les modules de commande sont programmés de manière à détecter, au moyen de cette adresse de destination, tous les messages destinés à l'actionneur quelle qu'en soit la provenance, et peuvent en conséquence déterminer l'état de l'actionneur.

Dans les modes de réalisation décrits jusqu'ici, l'état de l'actionneur est déterminé à partir de l'analyse des ordres qui lui sont envoyés et qui circulent sur le réseau. L'indicateur indique donc l'état que doit normalement avoir l'actionneur, ou état désiré. Cet état peut, en cas de défaillance de l'actionneur par exemple, être différent de l'état réel de l'actionneur. Pour obtenir une indication de l'état réel de l'actionneur on peut prévoir, en réponse à un ordre de commande, l'émission par l'actionneur d'un message de réponse indiquant si l'ordre a été ou non pris en compte. Les microprocesseurs des modules de commande associés à l'actionneur prennent alors en compte ces messages de réponse pour déterminer l'état réel de l'actionneur qui est indiqué dans les modules de commande.

## Revendications

1. Module de commande (18), manuel ou automatique d'un actionneur (14), destiné à être connecté à un réseau de transmission de données (12), auquel sont connectés une pluralité de modules de commande (16) et d'actionneurs (14), un même actionneur pouvant être associé à une pluralité de modules de commande, le module de commande comportant un microprocesseur (20), et des moyens d'adressage (26) pour lui affecter une adresse, le microprocesseur comportant des moyens de générer et d'émettre sur le réseau des messages destinés à la commande de l'actionneur associé,
module de commande caractérisé en ce qu'il comporte :
- des moyens pour fournir au microprocesseur une adresse de l'actionneur associé
- et des moyens (28) d'indication de l'état de l'actionneur, commandés par le microprocesseur, le microprocesseur comportant :
- des moyens de surveillance des messages transmis sur le réseau, lesdits messages comportant l'adresse de l'actionneur auquel ils sont destinés ou dont ils proviennent,
- des moyens d'identification, à partir de ladite adresse, des messages concernant ledit actionneur,
- et des moyens de détermination de l'état de l'actionneur à partir desdits messages.

2. Module selon la revendication 1, caractérisé en ce que le microprocesseur comporte des moyens pour détecter des messages destinés à l'actionneur associé, les messages comportant l'adresse dudit actionneur.

3. Module selon l'une des revendications 1 et 2, caractérisé en ce que le microprocesseur comporte des moyens pour détecter des messages émis par l'actionneur en réponse à un ordre de commande dudit actionneur.

4. Module selon l'une quelconque des revendications 1 à 3, caractérisé en ce que le microprocesseur comporte des moyens de générer des messages de commande d'un actionneur associé, les messages comportant l'adresse dudit l'actionneur associé.

5. Module selon l'une quelconque des revendications 1 à 4, caractérisé en ce qu'une même adresse est affectée à un actionneur et à tous les modules de commande qui y sont associés.

6. Module selon l'une quelconque des revendications 1 à 5, caractérisé en ce que le microprocesseur comporte une entrée (1) et une sortie (2) reliées à une interface (22), elle même reliée au réseau de transmission (12), une entrée de commande (3) recevant des signaux de commande ou de mesure et au moins une sortie (4) de commande des moyens (28) d'indication de l'état de l'actionneur.

7. Module selon la revendication 6, caractérisé en ce que l'entrée de commande (3) du microprocesseur est connectée à une source de tension par l'intermédiaire d'un bouton-poussoir (24), l'actionnement du bouton-poussoir provoquant l'émission par le microprocesseur d'un message de commande destiné à l'actionneur associé.

8. Module selon la revendication 7, caractérisé en ce qu'il comporte des moyens de sélection (30) permettant de sélectionner un mode de fonctionnement particulier du module de commande, les moyens de sélection comportent un commutateur (30) à 3 positions dont les sorties codées sont connectées au microprocesseur pour sélectionner le mode de fonctionnement, les messages émis par le microprocesseur étant caractéristiques du mode de fonctionnement sélectionné, l'actionnement du bouton-poussoir (24) entraînant l'émission d'un ordre de marche de l'actionneur associé dans une première position du commutateur, d'un ordre d'arrêt dans la deuxième position et d'un ordre de changement d'état dans la troisième position.

9. Module selon la revendication 6, caractérisé en ce que l'entrée de commande (3) du microprocesseur est connectée à un capteur de mesure, le microprocesseur comparant les signaux de sortie du capteur de mesure à des seuils prédéterminés et émettant des ordres de commande de l'actionneur en fonction des valeurs relatives des signaux de mesure et des seuils.

10. Module selon l'une quelconque des revendications 1 à 9, caractérisé en ce que les moyens (28) d'indication de l'état de l'actionneur sont des moyens lumineux.

## Patentansprüche

1. Handbetätigtes oder automatisches Steuermodul (18) für ein Stellglied (14) zum Anschluß an ein Datenübertragungsnetz (12), an welches mehrere Steuermodule (16) und Stellglieder (14) angeschlossen sind, wobei ein Stellglied mehreren Steuermodulen zugeordnet sein kann, das Steuermodul einen Mikroprozessor (20) sowie Adressiermittel (26) zu seiner Adressierung umfaßt und der Mikroprozessor Mittel zur Erzeugung und Einleitung von Informationen in das Netz aufweist, die zur Ansteuerung des zugeordneten Stellglieds dienen,
dadurch gekennzeichnet, daß es folgende Komponenten umfaßt:
- Mittel zur Weitergabe einer Adresse des zugeordneten Stellglieds an den Mikroprozessor sowie
- über den Mikroprozessor gesteuerte Mittel (28) zur Anzeige des Schaltzustands des Stellglieds, wobei der Mikroprozessor
- Mittel zur Überwachung der über das Netz übertragenen Informationen, die die Adresse des Stellglieds enthalten, für welches sie bestimmt sind bzw. von dem sie stammen,
- Mittel zur Erkennung der das genannte Stellglied betreffenden Informationen auf der Grundlage dieser Adresse und
- Mittel zur Bestimmung des Schaltzustands des Stellglieds auf der Grundlage dieser Informationen aufweist.

2. Steuermodul nach Anspruch 1, dadurch gekennzeichnet, daß der Mikroprozessor Mittel zur Erfassung der für das zugeordnete Stellglied bestimmten Informationen umfaßt, wobei diese Informationen die Adresse des genannten Stellglieds enthalten.

3. Steuermodul nach einem der Ansprüche 1 und 2, dadurch gekennzeichnet, daß der Mikroprozessor Mittel zur Erfassung von Informationen umfaßt, die nach einem an das Stellglied übermittelten Steuerbefehl von diesem Stellglied als Antwortsignal ausgesandt werden.

4. Steuermodul nach irgendeinem der Ansprüche 1 bis 3, dadurch gekennzeichnet, daß der Mikroprozessor Mittel zur Erzeugung von Informationen zur Ansteuerung eines zugeordneten Stellglieds umfaßt, wobei die Informationen die Adresse des genannten zugeordneten Stellglieds enthalten.

5. Steuermodul nach irgendeinem der Ansprüche 1 bis 4, dadurch gekennzeichnet, daß einem Stellglied und sämtlichen, ihm zugeordneten Steuermodulen die gleiche Adresse zugewiesen wird.

6. Steuermodul nach irgendeinem der Ansprüche 1 bis 5, dadurch gekennzeichnet, daß der Mikroprozessor einen Eingang (1) und einen Ausgang (2), die an eine ihrerseits mit dem Datenübertragungsnetz (12) verbundene Schnittstelle (22) angeschlossen sind, einen Steuereingang (3) zur Aufnahme von Steuer- oder Meßsignalen und mindestens einen Steuerausgang zur Ansteuerung der Mittel (28) für die Anzeige des Schaltzustands des Stellglieds umfaßt.

7. Steuermodul nach Anspruch 6, dadurch gekennzeichnet, daß der Steuereingang (3) des Mikroprozessors über einen Drucktaster (24) an eine Spannungsquelle angeschlossen ist, wobei die Betätigung des Drucktasters die Aussendung eines für das zugeordnete Stellglied bestimmten Steuerbefehls bewirkt.

8. Steuermodul nach Anspruch 7, dadurch gekennzeichnet, daß es Stellmittel (30) zur Einstellung einer besonderen Betriebsart des Steuermoduls umfaßt, wobei die Stellmittel einen Umschalter (30) mit drei Schaltstellungen umfassen, dessen kodierte Ausgänge zur Einstellung der Betriebsart mit dem Mikroprozessor verbunden sind, die vom Mikroprozessor ausgesandten Informationen für die eingestellte Betriebsart kennzeichnend sind und die Betätigung des Drucktasters (24) in einer ersten Schaltstellung des Umschalters die Aussendung eines Einschaltbefehls für das zugeordnete Stellglied, in der zweiten Schaltstellung die Aussendung eines Ausschaltbefehls sowie in der dritten Schaltstellung die Aussendung eines Befehls zum Zustandswechsel bewirkt.

9. Steuermodul nach Anspruch 6, dadurch gekennzeichnet, daß der Steuereingang (3) des Mikroprozessors an einen Meßwertgeber angeschlossen ist, wobei der Mikroprozessor die Ausgangssignale des Meßwertgebers mit festgelegten Grenzwerten vergleicht und in Abhängigkeit von den jeweiligen Meßsignalen und Grenzwerten Steuerbefehle zur Ansteuerung des Stellglieds aussendet.

10. Steuermodul nach irgendeinem der vorhergehenden Ansprüche, dadurch gekennzeichnet, daß die Mittel (28) zur Anzeige des Schaltzustands des Stellglieds als Leuchtmelder ausgeführt sind.

## Claims

1. A manual or automatic control module (18) of an actuator (14), designed to be connected to a data transmission network (12), to which a plurality of control modules (16) and actuators (14) are connected, a single actuator being able to be associated to a plurality of control modules, the control module comprising a microprocessor (20), and addressing means (26) to assign an address to it, the microprocessor comprising means for generating and transmitting via the network messages designed for control of the associated actuator,
a control module characterized in that it comprises :
- means for supplying the microprocessor with an address of the associated actuator,
- and means (28) for indicating the state of the actuator, controlled by the microprocessor, the microprocessor comprising :
- means for monitoring the messages transmitted via the network, said messages comprising the address of the actuator for which they are intended or where they originate from,
- means for identifying, from said address, the messages concerning said actuator,
- and means for determining the state of the actuator from said messages.

2. The module according to claim 1, characterized in that the microprocessor comprises means for detecting the messages intended for the associated actuator, the messages comprising the address of said actuator.

3. The module according to either one of the claims 1 or 2, characterized in that the microprocessor comprises means for detecting the messages sent by the actuator in response to an operating order of said actuator.

4. The module according to any one of the claims 1 to 3, characterized in that the microprocessor comprises means for generating control messages of an associated actuator, the messages comprising the address of said associated actuator.

5. The module according to any one of the claims 1 to 4, characterized in that a single address is assigned to an actuator and to all the control modules which are associated thereto.

6. The module according to any one of the claims 1 to 5, characterized in that the microprocessor comprises an input (1) and an output (2) connected to an interface (22), itself connected to the transmission network (12), a control input (3) receiving control or measurement signals and at least one control output (4) of the means (28) for indicating the state of the actuator.

7. The module according to claim 6, characterized in that the control input (3) of the microprocessor is connected to a voltage source by means of a push-button (24), actuation of the push-button causing sending by the microprocessor of a control message intended for the associated actuator.

8. The module according to claim 7, characterized in that it comprises selection means (30) enabling a particular operating mode of the control module to be selected, the selection means comprising a 3-position selector switch (30) whose coded outputs are connected to the microprocessor to select the operating mode, the messages sent by the microprocessor being characteristic of the operating mode selected, actuation of the push-button (24) causing sending of a switch-on order of the associated actuator in a first position of the selector switch, of a switch-off order in the second position and of a change of state order in the third position.

9. The module according to claim 6, characterized in that the control input (3) of the microprocessor is connected to a measurement sensor, the microprocessor comparing the output signals of the measurement sensor to preset thresholds and sending control orders of the actuator depending on the relative values of the measurement signals and thresholds.

10. The module according to any one of the claims 1 to 9, characterized in that the means (28) for indicating the state of the actuator are luminous means.
